# EUROPÄISCHE PATENTSCHRIFT

(11) **EP 3 655 909 B1**
(45) Veröffentlichungstag und Bekanntmachung des Hinweises auf die Patenterteilung: **29.11.2023**
(21) Anmeldenummer: 18730755.8
(22) Anmeldetag: 11.06.2018
(51) Int. Cl.: G06Q 40/08, G08G 1/01

(54) **VERFAHREN UND VORRICHTUNGEN FÜR TEILNEHMER ÜBERGREIFENDE KOMMUNIKATION**
METHODS AND DEVICES FOR COMMUNICATION WHICH IS INTEROPERABLE BETWEEN SUBSCRIBERS
PROCÉDÉ ET DISPOSITIF POUR UNE COMMUNICATION INTER-PARTICIPANTS

(30) Priorität: 18.07.2017 DE 102017212249
(43) Veröffentlichungstag der Anmeldung: 27.05.2020
(73) Patentinhaber: Robert Bosch GmbH, 70442 Stuttgart (DE)
(72) Erfinder: OFFENHAEUSER, Andreas, 71672 Marbach Am Neckar (DE)
(86) Internationale Anmeldenummer: PCT/EP2018/065291
(87) Internationale Veröffentlichungsnummer: WO 2019/015871

(56) Entgegenhaltungen:
- DE-A1-102010 023 603
- DE-A1-102012 021 282
- Philip Ross: "Toyota Joins Coalition to Bring Blockchain Networks to Smart Cars - IEEE Spectrum", IEEE Spectrum, 24. Mai 2017 (2017-05-24), XP055499014, Gefunden im Internet: URL:https://spectrum.ieee.org/cars-that-th ink/computing/networks/toyota-joins-coalit ion-to-bring-blockchain-networks-to-smart- cars [gefunden am 2018-08-10]
- Gantait Amitranjan: "Implementing blockchain for cognitive IoT applications, Part 2: Use vehicle sensor data to execute smart transactions in Blockchain", IBM developerWorks, 5. Juni 2017 (2017-06-05), XP055499074, Gefunden im Internet: URL:https://www.ibm.com/developerworks/clo ud/library/cl-blockchain-for-cognitive-iot -apps2/index.html [gefunden am 2018-08-10]
- Anonymous: "Blockchain - Wikipedia", , 13. Juni 2017 (2017-06-13), XP055408908, Gefunden im Internet: URL:https://en.wikipedia.org/w/index.php?t itle=Blockchain&oldid=785374674 [gefunden am 2017-09-21]

## Beschreibung

### Stand der Technik

Die Erfindung betrifft ein Verfahren und eine Vorrichtung für Teilnehmer übergreifende Kommunikation.

In Teilnehmer übergreifender Kommunikation werden Daten über eine zentrale Datenbank ausgetauscht, in der Information über Wissen und Entscheidungen einzelner Fahrzeuge abgelegt werden und von der einzelne Fahrzeuge diese Information abrufen können. Derartige Datenbanken können beispielsweise von autonomen Fahrzeugen verwendet werden, um beim autonomen Fahren Information auszutauschen.

Der Artikel "Toyota Joins Coalition to Bring Blockchain Networks to Smart Cars" abrufbar unter https://spectrum.ieee.org/cars-that-think/computing/networks/toyota-joins-coalition-to-bring-blockchain-networks-to-smart-cars, offenbart Aspekte von Blockchain-Netzwerken für Fahrzeuge.

Der Artikel "Use vehicle sensor data to execute smart transactions in Blockchain" abrufbar unter https://developer.ibm.com/articles/cl-blockchain-for-cognitive-iot-apps2/, offenbart Aspekte der Verwendung von Sensordaten für die Auslösung von Ereignissen bei Transaktionen mit einer Blockchain.

DE 10 2012 021282 A1 und DE 10 2010 023 603 A1 offenbaren Aspekte der Fahrzeug zu Fahrzeug Kommunikation.

Der Artikel Blockchain - Wikipedia vom 13. Juni 2017, abrufbar unter https://en.wikipedia.org/w/index.php?title=Blockchain&oldid=785374674 offenbart allgemeine Aspekte zur Blockchain.

Ein Schlüssel für den Erfolg des autonomen Fahrens ist ein effektiver Schutz derartiger Datenbanken vor unbefugter Manipulation und vor unbefugtem Zugriff.

### Offenbarung der Erfindung

Dies wird durch die Verfahren und die Vorrichtungen nach den unabhängigen Ansprüchen erreicht.

Bezüglich der Verfahren beinhaltet ein Verfahren für Teilnehmer übergreifende Kommunikation den Empfang von Information über einen ersten Zustandsübergang in einem autonomen Fahrsystem von einem Teilnehmer am autonomen Fahrsystem, das Bestimmen von Information über einen Zustand des autonomen Fahrsystems abhängig von der Information über den ersten Zustandsübergang und abhängig von Information über wenigstens einen zweiten Zustandsübergang im autonomen Fahrsystem, und das Abspeichern der Information über den Zustand in wenigstens einer Blockchain.

Vorzugsweise umfasst die Information über den Zustand einen Header und Information über den ersten Zustandsübergang und den wenigstens einen zweiten Zustandsübergang.

Es wird zumindest ein Teil der Information über den Zustand aus der wenigstens einen Blockchain an wenigstens einen Teilnehmer des autonomen Fahrsystems gesendet.

Vorzugsweise umfasst die Information über die Zustandsänderung Information über eine Trajektorie eines Teilnehmers des autonomen Fahrsystems, über ein Objekt das von einem Teilnehmer des autonomen Fahrsystems erfasst wurde, über eine Entscheidung eines Teilnehmers des autonomen Fahrsystems, über einen ersten Teilnehmer des autonomen Fahrsystems, der von einem zweiten Teilnehmer des autonomen Fahrsystems erfasst wurde, oder über eine momentane Position wenigstens eines Teilnehmers des autonomen Fahrsystems.

Vorzugsweise wird Information über eine relative oder absolute Position der Teilnehmer unter den Teilnehmern und mit dem Rechensystem ausgetauscht, wobei nur Teile der Blockchain an einzelne Teilnehmer gesendet werden, die für diese Teilnehmer aufgrund ihrer Position relevant sind.

Ein Verfahren zur Teilnehmer übergreifenden Kommunikation in einem Teilnehmer umfasst das Bestimmen eines ersten Zustandsübergangs im autonomen Fahrsystem abhängig von Information über einen Zustand des autonomen Fahrsystems, wobei Information über wenigstens einen zweiten Zustandsübergang im autonomen Fahrsystem aus wenigstens einer Blockchain empfangen wird und der Zustand des autonomen Fahrsystems abhängig von der Information über den wenigstens einen zweiten Zustandsübergang bestimmt wird.

Vorzugsweise wird die Information über den zweiten Zustandsübergang abhängig von Information über wenigstens einen Teil des Zustands des autonomen Fahrsystems aus der wenigstens einen Blockchain verifiziert. Vorzugsweise wird die Information über den ersten Zustandsübergang zur Verwaltung in wenigstens einer Blockchain gesendet.

Eine Vorrichtung zur Teilnehmer übergreifenden Kommunikation umfasst einen Empfänger der ausgebildet ist, Information über einen ersten Zustandsübergang im autonomen Fahrsystem von einem Teilnehmer am autonomen Fahrsystem zu empfangen, ein Rechensystem, das ausgebildet ist, Information über einen Zustand des autonomen Fahrsystems abhängig von der Information über den ersten Zustandsübergang und abhängig von Information über wenigstens einen zweiten Zustandsübergang im autonomen Fahrsystem zu bestimmen, und die Information über den Zustand in wenigstens einer Blockchain abzuspeichern. Vorzugsweise umfasst die Information über den Zustand einen Header und Information über den ersten Zustandsübergang und den wenigstens einen zweiten Zustandsübergang.

Die Vorrichtung umfasst einen Sender, der ausgebildet ist, zumindest ein Teil der Information über den Zustand aus der wenigstens einen Blockchain an wenigstens einen Teilnehmer des autonomen Fahrsystems zu senden.

Vorzugsweise umfasst die Information über die Zustandsänderung Information über eine Trajektorie eines Teilnehmers des autonomen Fahrsystems, über ein Objekt das von einem Teilnehmer des autonomen Fahrsystems erfasst wurde, über eine Entscheidung eines Teilnehmers des autonomen Fahrsystems, über einen ersten Teilnehmer des autonomen Fahrsystems, der von einem zweiten Teilnehmer des autonomen Fahrsystems erfasst wurde, oder über eine momentane Position wenigstens eines Teilnehmers des autonomen Fahrsystems.

Eine Vorrichtung zur Teilnehmer übergreifenden Kommunikation in einem Teilnehmer umfasst ein Steuergerät, das ausgebildet ist, einen ersten Zustandsübergang im autonomen Fahrsystem abhängig von Information über einen Zustand des autonomen Fahrsystems zu bestimmen, wobei die Vorrichtung eine Empfangseinrichtung umfasst, die ausgebildet ist, Information über wenigstens einen zweiten Zustandsübergang im autonomen Fahrsystem aus einer Blockchain zu empfangen, und wobei das Steuergerät ausgebildet ist, den Zustand des autonomen Fahrsystems abhängig von der Information über den wenigstens einen zweiten Zustandsübergang zu bestimmen.

Vorzugsweise ist das Steuergerät ausgebildet, die Information über den zweiten Zustandsübergang abhängig von Information über wenigstens einen Teil des Zustands des autonomen Fahrsystems aus der Blockchain zu verifizieren.

Die Vorrichtung umfasst eine Sendeeinrichtung, die ausgebildet ist, die Information über den ersten Zustandsübergang zur Verwaltung in einer Blockchain zu senden.

Die Erfindung betrifft auch ein Kraftfahrzeug und ein Computerprogramm mit Instruktionen, bei deren Ausführung wenigstens eines der Verfahren abläuft. Weitere vorteilhafte Ausführungsformen sind Gegenstand der Beschreibung und der Zeichnung. In der Zeichnung zeigt
- Fig. 1: schematisch ein System zum autonomen Fahren,
- Fig. 2: ein Signalflussdiagramm mit Schritten eines Verfahrens zur Teilnehmer übergreifenden Kommunikation.

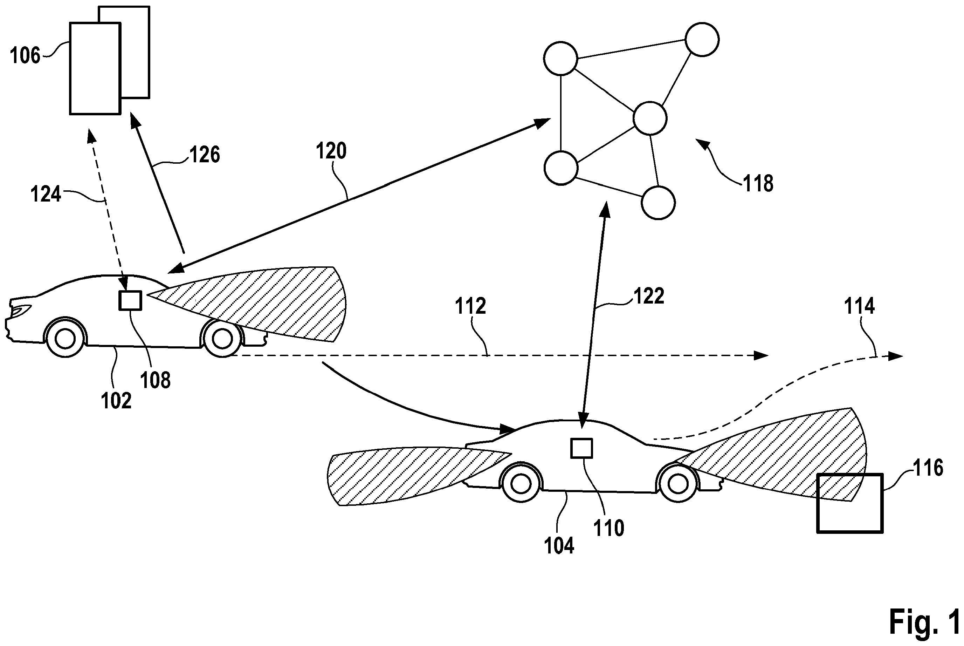

Figur 1 zeigt schematisch ein System zum autonomen Fahren mit einem ersten Teilnehmer 102, einem zweiten Teilnehmer 104 und wenigstens einem dritten Teilnehmer 106. Es können mehr oder weniger Teilnehmer vorgesehen sein.

Der erste Teilnehmer 102 und der zweite Teilnehmer 104 sind Fahrzeuge, insbesondere Kraftfahrzeuge. Der wenigstens eine dritte Teilnehmer 106 ist ein Infrastrukturelement, beispielsweise ein Teil eines Verkehrsleitsystems, das einen Abschnitt einer Straße mit Sensoren beobachtet.

Der erste Teilnehmer 102 und der zweite Teilnehmer 104 umfassen ebenfalls Sensoren zur Beobachtung ihrer Umgebung.

Die Sensoren sind beispielsweise Sensoren, die mittels Radar, Lidar, Kamera oder Ultraschall ihre die Umgebung beobachten.

Der erste Teilnehmer 102 umfasst ein erstes Steuergerät 108, der zweite Teilnehmer 104 umfasst ein zweites Steuergerät 110. Das erste Steuergerät 108 ist ausgebildet, einen ersten Zustandsübergang im autonomen Fahrsystem abhängig von Information über einen Zustand des autonomen Fahrsystems zu bestimmen. Das erste Steuergerät 108 ist ausgebildet, den Zustand des autonomen Fahrsystems abhängig von Information über wenigstens einen zweiten Zustandsübergang zu bestimmen. Der erste Teilnehmer 102 umfasst eine Empfangseinrichtung, die ausgebildet ist, Information über wenigstens einen zweiten Zustandsübergang im autonomen Fahrsystem aus einer Blockchain zu empfangen.

Unter einer Blockchain wird in diesem Zusammenhang eine Datenbank verstanden, deren Integrität, d.h. Sicherung gegen nachträgliche Manipulation, durch Speicherung eines Hashwertes eines vorangehenden Datensatzes im jeweils nachfolgenden Datensatz, also durch kryptographische Verkettung, gesichert ist. Es kann genau eine Blockchain vorgesehen sein. Es können auch mehrere Blockchains vorgesehen sein.

Als ein Zustand des autonomen Fahrsystems wird in diesem Zusammenhang beispielsweise Information über das autonome Fahrsystem verstanden, die zu einem Erfassungszeitpunkt erfasst wurde. Figur 1 stellt einen derartigen Zustand schematisch dar. Die Information über den Zustand umfasst in der beispielhaften Blockchain einen Header und Information über den ersten Zustandsübergang und wenigstens den zweiten Zustandsübergang. Der Header umfasst im Beispiel wenigstens einen Hashwert wenigstens eines in der Blockchain unmittelbar vorherigen Zustands des autonomen Fahrsystems. Der Header umfasst im Beispiel zudem einen Verifikationswert, beispielsweise ein Merkle root Wert.

Die Information über den Zustand umfasst beispielsweise Information über eine erste Trajektorie 112 des ersten Teilnehmers 102 oder eine zweite Trajektorie 114 des zweiten Teilnehmers 104 zum Erfassungszeitpunkt. Die Information über den Zustand umfasst beispielsweise Information über ein Objekt 116 das von einem der Teilnehmer, im Beispiel dem zweiten Teilnehmer 104, des autonomen Fahrsystems zum Erfassungszeitpunkt erfasst wird. Die Information über den Zustand kann auch eine Information über eine Entscheidung eines der Teilnehmer des autonomen Fahrsystems zum Erfassungszeitpunkt umfassen. Die Information über den Zustand kann auch eine Information umfassen, die der erste Teilnehmer 102 vom zweiten Teilnehmer 104 des autonomen Fahrsystems zum Erfassungszeitpunkt erfasst. Die Information über den Zustand kann auch eine Information über eine zum Erfassungszeitpunkt momentane Position eines der Teilnehmer oder Information über die momentanen Positionen aller Teilnehmer des autonomen Fahrsystems in einem erfassten Abschnitt umfassen.

Die Information über den Zustandsübergang umfasst beispielsweise zumindest teilweise die erwähnte Information über den Zustand zum Erfassungszeitpunkt. Vorzugweise umfasst die Information über die Zustandsänderung nur Information über Änderungen des Zustands zwischen zwei aufeinanderfolgenden Erfassungszeitpunkten.

Das erste Steuergerät 108 ist optional dazu ausgebildet, die Information über den zweiten Zustandsübergang abhängig von Information über wenigstens einen Teil des Zustands des autonomen Fahrsystems aus der Blockchain zu verifizieren. Dazu wird beispielsweise eine Gültigkeit des ersten Zustands mittels des Hashwerts und des Verifikationswerts aus dem Header des ersten Zustands und Information über wenigstens einen vorherigen Zustand überprüft. Es kann vorgesehen sein, den ersten Zustand nur dann zu verwenden, wenn die Verifikation die Gültigkeit des ersten Zustands bestätigt.

Der erste Teilnehmer 102 umfasst zudem eine Sendeeinrichtung, die ausgebildet ist, die Information über den ersten Zustandsübergang zur Verwaltung in einer Blockchain zu senden.

Der zweite Teilnehmer 104 ist im Beispiel bezüglich des ersten Steuergeräts 102, des Senders und der Empfangseinrichtung entsprechend dem ersten Teilnehmer 102 ausgebildet.

Der wenigstens eine dritte Teilnehmer 106 ist im Beispiel bezüglich des ersten Steuergeräts 102, des Senders entsprechend dem ersten Teilnehmer 102 ausgebildet.

Die Blockchain wird im Beispiel in einem verteilten Rechensystem 118 verteilt gespeichert und verarbeitet. Es kann auch ein zentrales Rechensystem vorgesehen sein.

Eine Vorrichtung zur Teilnehmer übergreifenden Kommunikation eines autonomen Fahrsystems umfasst das Rechensystem 118. Die Vorrichtung umfasst zudem einen Empfänger der ausgebildet ist, Information über den ersten Zustandsübergang im autonomen Fahrsystem von wenigstens einem der Teilnehmer am autonomen Fahrsystem zu empfangen. Das Rechensystem 118 ist zudem ausgebildet, Information über den Zustand des autonomen Fahrsystems abhängig von der Information über den ersten Zustandsübergang und abhängig von Information über den wenigstens einen zweiten Zustandsübergang im autonomen Fahrsystem zu bestimmen, und die Information über den Zustand in wenigstens einer Blockchain abzuspeichern.

Im Beispiel umfasst die Information über den Zustand den Header und Information über den ersten Zustandsübergang und den wenigstens einen zweiten Zustandsübergang.

Die Vorrichtung umfasst zudem einen Sender, der ausgebildet ist, zumindest ein Teil der Information über den Zustand aus der wenigstens einen Blockchain an wenigstens einen der Teilnehmer des autonomen Fahrsystems zu senden.

Der erste Teilnehmer 102 ist über eine erste Datenleitung 120 mit dem Rechensystem 118 verbindbar. Der zweite Teilnehmer 104 ist über eine zweite Datenleitung 122 mit dem Rechensystem 118 verbindbar. Der wenigstens eine dritte Teilnehmer 106 ist im Beispiel über wenigstens eine dritte Datenleitung 124 mit dem ersten Teilnehmer 102 verbindbar. Der wenigstens eine dritte Teilnehmer 106 ist im Beispiel über wenigstens eine vierte Datenleitung 126 mit dem zweiten Teilnehmer 104 verbindbar. Es kann auch eine Verbindung direkt zwischen dem ersten Teilnehmer 102 und dem zweiten Teilnehmer 104 oder dem wenigstens einen dritten Teilnehmer 106 und dem Rechensystem 118 vorgesehen sein. Die erwähnten Verbindungen basieren beispielsweise auf dem Long Term Evolution Standard 3GPP LTE Release 12 oder einer anderen drahtlosen Kommunikationsverbindung.

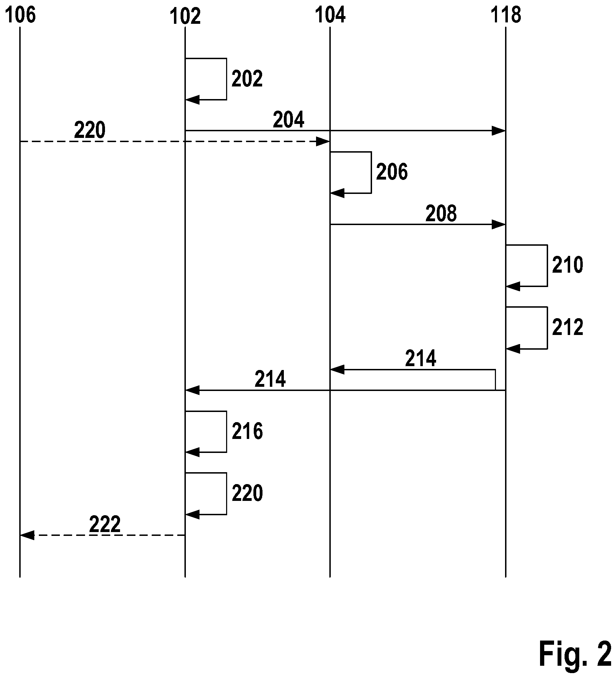

Ein Verfahren zur Teilnehmer übergreifenden Kommunikation beim autonomen Fahren wird im Folgenden anhand der Figur 2 beschrieben.

In einem Schritt 202 wird vom ersten Teilnehmer 102 Information über den ersten Zustandsübergang im autonomen Fahrsystem abhängig von Information über den Zustand des autonomen Fahrsystems bestimmt.

In einer Nachricht 204 wird Information über einen ersten Zustandsübergang vom ersten Teilnehmer 102 an das Rechensystem 118 übertragen.

In einem Schritt 206 wird vom zweiten Teilnehmer 102 Information über den zweiten Zustandsübergang im autonomen Fahrsystem abhängig von Information über den Zustand des autonomen Fahrsystems bestimmt.

In einer Nachricht 208 wird Information über einen zweiten Zustandsübergang vom zweiten Teilnehmer 104 an das Rechensystem 118 übertragen.

In einem Schritt 210 wird Information über den Zustand des autonomen Fahrsystems abhängig von der Information über den ersten Zustandsübergang und abhängig von Information über den zweiten Zustandsübergang im bestimmt.

Es können auch weitere Zustandsübergänge des zweiten Teilnehmers 104 oder anderer Teilnehmer am autonomen Fahrsystem als weitere zweite Zustandsübergänge empfangen werden. Das bedeutet, im Beispiel wird wenigstens ein zweiter Zustandsübergang empfangen.

In einem Schritt 212 wird die Information über den Zustand in wenigstens einer Blockchain abgespeichert. Dazu wird beispielweise Information über den Zustand als neuer Block der Blockchain samt zugehörigem Header aus erstem Zustandsübergang, zweitem Zustandsübergang und weiteren bereits verfügbaren Zustandsübergängen anderer Teilnehmer am autonomen Fahrsystem ermittelt. Die Information über den Zustand umfasst den Header und Information über den ersten Zustandsübergang und den wenigstens einen zweiten Zustandsübergang.

In einer Nachricht 214 wird zumindest ein Teil der Information über den Zustand aus der wenigstens einen Blockchain an wenigstens einen Teilnehmer des autonomen Fahrsystems gesendet. Die Nachricht 210 wird im Beispiel als multicast Nachricht an den ersten Teilnehmer 102 und den zweiten Teilnehmer 104 gesendet.

In einem Schritt 216 wird im Beispiel vom ersten Teilnehmer 102 die Information aus der Nachricht 214 über den zweiten Zustandsübergang abhängig von Information über wenigstens einen Teil des Zustands des autonomen Fahrsystems aus der wenigstens einen Blockchain verifiziert. Der zweite Teilnehmer 104 verifiziert die Nachricht 214 im Beispiel nicht. Es kann vorgesehen sein, dass auch der zweite Teilnehmer 104 die Nachricht 214 verifiziert.

Anschließend wird in einem Schritt 218 ein neuer erster Zustandsübergang im autonomen Fahrsystem abhängig von der Information über den Zustand des autonomen Fahrsystems aus der Nachricht 214 bestimmt. In dieser wird Information über den wenigstens einen zweiten Zustandsübergang im autonomen Fahrsystem aus der Blockchain empfangen und der neue Zustand des autonomen Fahrsystems abhängig von der Information über den wenigstens einen zweiten Zustandsübergang bestimmt.

Der zweite Teilnehmer 104 bestimmt in diesem Beispiel keinen neuen Zustand aus der Nachricht 214. Es kann vorgesehen sein, dass auch der zweite Teilnehmer 104 einen neuen Zustand bestimmt.

Optional kann der wenigstens eine dritte Teilnehmer 106 Information zur Bestimmung der ersten Zustandsänderung oder der zweiten Zustandsänderung an den ersten Teilnehmer 102 oder den zweiten Teilnehmer 104 senden. Diese ist in Figur 2 für am Beispiel vor der Bestimmung der zweiten Zustandsänderung im Schritt 206 als gestrichelte Nachricht 218 dargestellt. Der Zustand wird optional dem dritten Teilnehmer 106 über eine, in Figur 2 gestrichelte dargestellte, Nachricht 220 vom ersten Teilnehmer 102 nach Erhalt der Nachricht 214 übermittelt.

Anschließend werden diese Schritte im Beispiel wiederholt.

Vorzugsweise wird zudem Information über eine relative oder absolute Position der Teilnehmer unter den Teilnehmern und mit dem Rechensystem 118 ausgetauscht. In diesem Fall kann vorgesehen sein, nur Teile der Blockchain an einzelne Teilnehmer zu senden, die für diese Teilnehmer aufgrund ihrer Position relevant sind, d.h. deren Distanz zueinander einen vorgegebenen Wert unterschreitet. Die Information über die relative oder absolute Position wird beispielsweise über eine Verbindung der Teilnehmer mit einem Serversystem ausgetauscht.

Das Rechensystem 118 und das Serversystem können zentral oder dezentral ausgeführt sein.

Eine Entscheidung eines Teilnehmers, beispielsweise des zweiten Teilnehmers 104 die zweite Trajektorie 114 anstelle einer zuvor übermittelten alten zweiten Trajektorie, die im Beispiel geradeaus durch den Ort des Objekts 116 hindurch verlief, zu wählen, um dem Objekt 116 auszuweichen, wird als zweite Zustandsänderung dem ersten Teilnehmer 102 über die Blockchain zur Verfügung gestellt. Sobald die zweite Zustandsänderung Teil der Blockchain ist, kann diese Information nicht mehr manipuliert werden. Dasselbe gilt für die erste Trajektorie 112, die der erste Teilnehmer 102 als erste Zustandsänderung übermittelte. Damit kann zuverlässig und vertrauenswürdig der gesamte Vorgang rekonstruiert werden. Außerdem kann sich der erste Teilnehmer 102 aufgrund der Verlässlichkeit der Blockchain darauf verlassen, dass die zweite Trajektorie 114 tatsächlich von dem zweiten Teilnehmer 104 stammt. Seine eigene Entscheidung, wie auf die zweite Trajektorie 114 zu reagieren ist, basiert damit ebenfalls auf einer zuverlässigen Information. Dasselbe gilt für Information von dem wenigstens einen dritten Teilnehmer 106. Außerdem wird der erste Teilnehmer 102 so auch über das Objekt 116 informiert, ohne selbst mit den erwähnten Sensoren Information über das Objekt 116 erfasst zu haben.

Somit lässt sich sowohl im Falle eines Unfalls die Frage klären aufgrund welcher Informationen, das Fahrzeug wie gehandelt hat und durch die Vernetzung aller Fahrzeuge mit einer Blockchain-Kette, die eine zeitliche Abfolge von aufeinanderfolgenden Zuständen enthält auch klären woher falsche Informationen stammten. Insbesondere kann durch Auswerten der Inhalte der Blockchain entschieden werden ob
- der zweite Teilnehmer 104 das Objekt 116 falsch erkannt/klassifiziert hat,
- der zweite Teilnehmer 104 selbst falsch gehandelt hat,
- der erste Teilnehmer 102 aufgrund der Informationen vom zweiten Teilnehmer 104 falsch gehandelt hat,
- der erste Teilnehmer 102 aufgrund von falschen Informationen eines der wenigstens einen dritten Teilnehmer 106 den zweiten Teilnehmer 104 fälschlicherweise als relevante Informationsquelle eingestuft hat.

Werden in der Blockchain auch geplante Aktionen eines Fahrzeugs oder seine Planungsebene hinterlegt, lassen sich dadurch auch Anwendungsfälle des kooperativen Fahrens abdecken.

Dieses System schafft durch die vertrauenswürdige, nicht modifizierbare Datenhaltung auch eine verlässliche Grundlage für juristische Diskussionen.

Auch die Steuergeräte können regelmäßig Zustände der Blockchain oder erfasstes Wissen über die Umgebung oder eigene Entscheidungen speichern.

Zugangsrechte zu Information aus der Blockchain können konfigurierbar sein. Je nach Anwendungsfall kann das Vertrauen in das System zusätzlich dadurch gestärkt werden, dass der Zugang zur Blockchain eingeschränkt wird. Beispielsweise wird dazu ein kryptographischer Schlüssel verwendet, der einem Teilnehmer das verschlüsselte Übermitteln der Zustandsänderungen ermöglicht und somit die Lesbarkeit der Zustände durch unberechtigte verhindert. Diese Verschlüsselung beeinträchtigt nicht die Header, die in diesem Falle unverschlüsselt übermittelt werden um die Verifikation eines Zustands zu ermöglichen, der diese Zustandsänderung enthält. Durch kryptographische Schlüsselpaare kann anderen Teilnehmern gezielt der Zugang zu verschlüsselten Zustandsänderungen ermöglicht werden, ohne dass diese allen anderen Teilnehmern an der Blockchain zugänglich werden.

Ein Computerprogramm oder mehrere Computerprogramme umfassen Instruktionen, die auf dem jeweiligen Teilnehmer und dem Rechensystem 118 ablaufen können um das jeweilige Verfahren auszuführen.

## Patentansprüche

1. Verfahren zur Teilnehmer übergreifenden Kommunikation, in dem Information über einen ersten Zustandsübergang in einem autonomen Fahrsystem von einem ersten Teilnehmer (102) am autonomen Fahrsystem empfangen wird, und in dem Information über einen Zustand des autonomen Fahrsystems abhängig von der Information über den ersten Zustandsübergang und abhängig von Information über wenigstens einen zweiten Zustandsübergang im autonomen Fahrsystem bestimmt wird, und in dem Information über den Zustand in wenigstens einer Blockchain abgespeichert wird wobei die Teilnehmer Fahrzeuge sind und wobei das Verfahren **dadurch gekennzeichnet ist, dass** eine Entscheidung eines zweiten Teilnehmers (104), eine zweite Trajektorie (114) anstelle einer zuvor übermittelten alten zweiten Trajektorie zu wählen, um einem Objekt (116) auszuweichen, als zweite Zustandsänderung dem ersten Teilnehmer (102) über die wenigstens eine Blockchain zur Verfügung gestellt wird und wobei die Entscheidung des ersten Teilnehmers (102), wie auf die zweite Trajektorie (114) zu reagieren ist, auf der zweiten Trajektorie (114) basiert.

2. Verfahren nach Anspruch 1, **dadurch gekennzeichnet, dass** die Information über den Zustand einen Header und Information über den ersten Zustandsübergang und den wenigstens einen zweiten Zustandsübergang umfasst.

3. Verfahren nach Anspruch 1 oder 2 **dadurch gekennzeichnet, dass** zumindest ein Teil der Information über den Zustand aus der wenigstens einen Blockchain an wenigstens einen Teilnehmer des autonomen Fahrsystems gesendet wird (214).

4. Verfahren nach einem der vorherigen Ansprüche, **dadurch gekennzeichnet, dass** die Information über die Zustandsänderung Information über eine Trajektorie eines Teilnehmers des autonomen Fahrsystems, über das Objekt das von einem Teilnehmer des autonomen Fahrsystems erfasst wurde, über eine Entscheidung eines Teilnehmers des autonomen Fahrsystems, über den ersten Teilnehmer (102) des autonomen Fahrsystems, der vom zweiten Teilnehmer (104) des autonomen Fahrsystems erfasst wurde, oder über eine momentane Position wenigstens eines Teilnehmers des autonomen Fahrsystems umfasst.

5. Verfahren nach einem der Ansprüche 1 bis 4, **dadurch gekennzeichnet, dass** Information über eine relative oder absolute Position der Teilnehmer (102, 104, 106) unter den Teilnehmern (102, 104, 106) und mit dem Rechensystem (118) ausgetauscht wird, wobei nur Teile der Blockchain an einzelne Teilnehmer (102, 104, 106) gesendet werden, die für diese Teilnehmer aufgrund ihrer Position relevant sind.

6. Verfahren zur Teilnehmer übergreifenden Kommunikation in einem ersten Teilnehmer (102), in dem ein erster Zustandsübergang im autonomen Fahrsystem abhängig von Information über einen Zustand des autonomen Fahrsystems bestimmt wird, wobei die Teilnehmer Fahrzeuge sind und wobei Information über wenigstens einen zweiten Zustandsübergang im autonomen Fahrsystem aus wenigstens einer Blockchain empfangen (214) wird und der Zustand des autonomen Fahrsystems abhängig von der Information über den wenigstens einen zweiten Zustandsübergang bestimmt (218) wird, wobei das Verfahren **dadurch gekennzeichnet ist, dass** eine Entscheidung eines zweiten Teilnehmers (104), eine zweite Trajektorie (114) anstelle einer zuvor übermittelten alten zweiten Trajektorie zu wählen, um einem Objekt (116) auszuweichen, als zweite Zustandsänderung dem ersten Teilnehmer (102) über die wenigstens eine Blockchain zur Verfügung gestellt wird und wobei die Entscheidung des ersten Teilnehmers (102), wie auf die zweite Trajektorie (114) zu reagieren ist, auf der zweiten Trajektorie (114) basiert.

7. Verfahren nach Anspruch 6, **dadurch gekennzeichnet, dass** die Information über den zweiten Zustandsübergang abhängig von Information über wenigstens einen Teil des Zustands des autonomen Fahrsystems aus der wenigstens einen Blockchain verifiziert (216) wird.

8. Verfahren nach einem der Ansprüche 6 oder 7, **dadurch gekennzeichnet, dass** die Information über den ersten Zustandsübergang zur Verwaltung in wenigstens einer Blockchain gesendet (204) wird.

9. System umfassend einen ersten Teilnehmer (102) und eine Vorrichtung zur Teilnehmer übergreifenden Kommunikation, wobei die Vorrichtung einen Empfänger umfasst, der ausgebildet ist, Information über einen ersten Zustandsübergang in einem autonomen Fahrsystem von einem Teilnehmer (102, 104, 106) am autonomen Fahrsystem zu empfangen, wobei die Vorrichtung ein Rechensystem (118) umfasst, das ausgebildet ist, Information über einen Zustand des autonomen Fahrsystems abhängig von der Information über den ersten Zustandsübergang und abhängig von Information über wenigstens einen zweiten Zustandsübergang im autonomen Fahrsystem zu bestimmen, und die Information über den Zustand in wenigstens einer Blockchain abzuspeichern, und wobei die Teilnehmer Fahrzeuge sind, und wobei das System **dadurch gekennzeichnet ist, dass** das Rechensystem dazu ausgebildet ist, eine Entscheidung eines zweiten Teilnehmers (104), eine zweite Trajektorie (114) anstelle einer zuvor übermittelten alten zweiten Trajektorie zu wählen, um einem Objekt (116) auszuweichen, als zweite Zustandsänderung dem ersten Teilnehmer (102) über die wenigstens eine Blockchain zur Verfügung zu stellen, wobei der erste Teilnehmer (102) ausgebildet ist, die Entscheidung des ersten Teilnehmers (102), wie auf die zweite Trajektorie (114) zu reagieren ist, auf die zweite Trajektorie (114) zu basieren.

10. System nach Anspruch 9, **dadurch gekennzeichnet, dass** die Information über den Zustand einen Header und Information über den ersten Zustandsübergang und den wenigstens einen zweiten Zustandsübergang umfasst.

11. System nach einem der Ansprüche 9 oder 10, **dadurch gekennzeichnet, dass** die Vorrichtung einen Sender umfasst, der ausgebildet ist, zumindest ein Teil der Information über den Zustand aus der wenigstens einen Blockchain an wenigstens einen Teilnehmer des autonomen Fahrsystems zu senden.

12. System nach einem der Ansprüche 9 bis 11, **dadurch gekennzeichnet, dass** die Information über die Zustandsänderung Information über eine Trajektorie eines Teilnehmers des autonomen Fahrsystems, über das Objekt das von einem Teilnehmer des autonomen Fahrsystems erfasst wurde, über eine Entscheidung eines Teilnehmers des autonomen Fahrsystems, überden ersten Teilnehmer (102) des autonomen Fahrsystems, der vom zweiten Teilnehmer (104) des autonomen Fahrsystems erfasst wurde, oder über eine momentane Position wenigstens eines Teilnehmers des autonomen Fahrsystems umfasst.

13. Vorrichtung zur Teilnehmer übergreifenden Kommunikation in einem ersten Teilnehmer (102), wobei die Vorrichtung ein Steuergerät (108) umfasst, das ausgebildet ist, einen ersten Zustandsübergang in einem autonomen Fahrsystem abhängig von Information über einen Zustand des autonomen Fahrsystems zu bestimmen, wobei die Teilnehmer Fahrzeuge sind, und wobei die Vorrichtung **dadurch gekennzeichnet ist, dass** sie eine Empfangseinrichtung umfasst, die ausgebildet ist, Information über wenigstens einen zweiten Zustandsübergang im autonomen Fahrsystem aus einer Blockchain zu empfangen, und wobei das Steuergerät ausgebildet ist, den Zustand des autonomen Fahrsystems abhängig von der Information über den wenigstens einen zweiten Zustandsübergang zu bestimmen, wobei der zweite Zustandsübergang eine Entscheidung eines zweiten Teilnehmers, eine zweite Trajektorie anstelle einer zuvor übermittelten alten zweiten Trajektorie zu wählen, um einem Objekt auszuweichen, enthält und die Entscheidung des ersten Teilnehmers (102), wie auf die zweite Trajektorie (114) zu reagieren ist, auf die zweite Trajektorie (114) zu basieren.

14. Vorrichtung nach Anspruch 13, **dadurch gekennzeichnet, dass** das Steuergerät (108) ausgebildet ist, die Information über den zweiten Zustandsübergang abhängig von Information über wenigstens einen Teil des Zustands des autonomen Fahrsystems aus der Blockchain zu verifizieren.

15. Vorrichtung nach einem der Ansprüche 13 oder 14, **dadurch gekennzeichnet, dass** die Vorrichtung eine Sendeeinrichtung umfasst, die ausgebildet ist, die Information über den ersten Zustandsübergang zur Verwaltung in einer Blockchain zu senden.

16. Kraftfahrzeug mit einem Steuergerät (108) nach einem der Ansprüche 13 bis 15.

17. Computerprogramm, **dadurch gekennzeichnet, dass** das Computerprogramm Instruktionen umfasst, bei deren Ausführung wenigstens eines der Verfahren nach den Ansprüche 1 bis 8 abläuft.

## Claims

1. Method for cross-subscriber communication, in which information about a first
state transition in an autonomous driving system is received from a first subscriber (102) on the autonomous driving system, and in which information about a state of the autonomous driving system is determined on the basis of the information about the first state transition and on the basis of information about at least one second state transition in the autonomous driving system, and in which information about the state is stored in at least one blockchain, wherein the subscribers
are vehicles and wherein the method is **characterized in that** a decision by a second subscriber
(104) to select a second trajectory (114) instead of a previously transmitted old second trajectory in order to avoid an object (116) is provided to the first subscriber (102) as a second state change via the at least one blockchain and wherein the decision by the first subscriber (102) regarding how to react to the second trajectory (114) is based on the second trajectory (114).

2. Method according to Claim 1, **characterized in that** the information about the state comprises a header and information about the first state transition and the at least one second state transition.

3. Method according to Claim 1 or 2, **characterized in that** at least one portion of the information about the state from the at least one blockchain is sent (214) to at least one subscriber of the autonomous driving system.

4. Method according to one of the preceding claims, **characterized in that** the information about the state change comprises information about a trajectory of a subscriber of the autonomous driving system, about the object that has been detected by a subscriber of the autonomous driving system, about a decision by a subscriber of the autonomous driving system, about the first subscriber (102) of the autonomous driving system that has been detected by the second subscriber (104) of the autonomous driving system, or about an instantaneous position of at least one subscriber of the autonomous driving system.

5. Method according to one of Claims 1 to 4, **characterized in that** information about a relative or absolute position of the subscribers (102, 104, 106) is exchanged among the subscribers (102, 104, 106) and with the computing system (118), wherein individual subscribers (102, 104, 106) are sent only portions of the blockchain that are relevant to these subscribers on the basis of their position.

6. Method for cross-subscriber communication in a first subscriber (102), in which a first state transition in the autonomous driving system is determined on the basis of information about a state of the autonomous driving system, wherein the subscribers are vehicles and wherein information about at least one second state transition in the autonomous driving system is received (214) from at least one blockchain, and the state of the autonomous driving system is determined (218) on the basis of the information about the at least one second state transition, wherein the method is **characterized in that** a decision by a second subscriber (104) to select a second trajectory (114) instead of a previously transmitted old second trajectory in order to avoid an object (116) is provided to the first subscriber (102) as a second state change via the at least one blockchain and wherein the decision by the first subscriber (102) regarding how to react to the second trajectory (114) is based on the second trajectory (114).

7. Method according to Claim 6, **characterized in that** the information about the second state transition is verified (216) on the basis of information about at least one part of the state of the autonomous driving system from the at least one blockchain.

8. Method according to either of Claims 6 and 7, **characterized in that** the information about the first state transition is sent (204) for management in at least one blockchain.

9. System comprising a first subscriber (102) and an apparatus for cross-subscriber communication, wherein the
apparatus comprises a receiver that is designed to receive information about a first state transition in an autonomous driving system from a subscriber (102, 104, 106) on the autonomous driving system, wherein the apparatus comprises a computing system (118) that is designed to determine information about a state of the autonomous driving system on the basis of the information about the first state transition and on the basis of information about at least one second state transition in the autonomous driving system, and to store the information about the state in at least one blockchain, and wherein the subscribers are vehicles, and wherein the system is **characterized in that** the computing system is designed to provide a decision by a second subscriber (104) to select a second trajectory (114) instead of a previously transmitted old second trajectory in order to avoid an object (116) to the first subscriber (102) as a second state change via the at least one blockchain, wherein the first subscriber (102) is designed to base the decision by the first subscriber (102) regarding how to react to the second trajectory (114) on the second trajectory (114).

10. System according to Claim 9, **characterized in that** the information about the state comprises a header and information about the first state transition and the at least one second state transition.

11. System according to either of Claims 9 and 10, **characterized in that** the apparatus comprises a transmitter that is designed to send at least one portion of the information about the state from the at least one blockchain to at least one subscriber of the autonomous driving system.

12. System according to one of Claims 9 to 11, **characterized in that** the information about the state change comprises information about a trajectory of a subscriber of the autonomous driving system, about the object that has been detected by a subscriber of the autonomous driving system, about a decision by a subscriber of the autonomous driving system, about the first subscriber (102) of the autonomous driving system that has been detected by the second subscriber (104) of the autonomous driving system, or about an instantaneous position of at least one subscriber of the autonomous driving system.

13. Apparatus for cross-subscriber communication in a first subscriber (102), wherein the apparatus comprises a
control unit (108) that is designed to determine a first state transition in an autonomous driving system on the basis of information about a state of the autonomous driving system, wherein the subscribers are vehicles, and wherein the apparatus is **characterized in that** it comprises a receiving device that is designed to receive information about at least one second state transition in the autonomous driving system from a blockchain, and wherein the control unit is designed to determine the state of the autonomous driving system on the basis of the information about the at least one second state transition, wherein the second state transition contains a decision by a second subscriber to select a second trajectory instead of a previously transmitted old second trajectory in order to avoid an object, and to base the decision by the first subscriber (102) regarding how to react to the second trajectory (114) on the second trajectory (114).

14. Apparatus according to Claim 13, **characterized in that** the control unit (108) is designed to verify the information about the second state transition on the basis of information about at least one part of the state of the autonomous driving system from the blockchain.

15. Apparatus according to either of Claims 13 and 14, **characterized in that** the apparatus comprises a transmitting device that is designed to send the information about the first state transition for management in a blockchain.

16. Motor vehicle having a control unit (108) according to one of Claims 13 to 15.

17. Computer program, **characterized in that** the computer program comprises instructions, the execution of which results in at least one of the methods according to Claims 1 to 8 taking place.

## Revendications

1. Procédé de communication inter-participants, dans lequel des informations à propos d'une première transition d'état dans un système de conduite autonome sont reçues par un premier participant (102) au système de conduite autonome, et dans lequel des informations à propos d'un état du système de conduite autonome sont déterminées en fonction des informations à propos de la première transition d'état et en fonction d'informations à propos d'au moins une deuxième transition d'état dans le système de conduite autonome, et dans lequel des informations à propos de l'état sont mémorisées dans au moins une chaîne de blocs,
les participants
étant des véhicules et le procédé étant **caractérisé en ce qu'**une décision d'un deuxième participant (104) de sélectionner une deuxième trajectoire (114) au lieu d'une ancienne deuxième trajectoire communiquée précédemment, afin de contourner un objet (116), est mise à la disposition du premier participant (102) en tant que deuxième changement d'état par le biais de l'au moins une chaîne de blocs et la décision du premier participant (102) sur la manière de réagir à la deuxième trajectoire (114) se basant sur la deuxième trajectoire (114).

2. Procédé selon la revendication 1, **caractérisé en ce que** les informations à propos de l'état comprennent un en-tête ainsi que des informations à propos de la première transition d'état et l'au moins une deuxième transition d'état.

3. Procédé selon la revendication 1 ou 2, **caractérisé en ce qu'**au moins une partie des informations à propos de l'état est envoyée depuis l'au moins une chaîne de blocs à au moins un participant du système de conduite autonome (214).

4. Procédé selon l'une des revendications précédentes, **caractérisé en ce que** les informations à propos du changement d'état comprennent des informations à propos d'une trajectoire d'un participant du système de conduite autonome, à propos de l'objet qui a été détecté par un participant du système de conduite autonome, à propos d'une décision d'un participant du système de conduite autonome, à propos du premier participant (102) du système de conduite autonome qui a été détecté par le deuxième participant (104) du système de conduite autonome, ou à propos d'une position momentanée d'au moins un participant du système de conduite autonome.

5. Procédé selon l'une des revendications 1 à 4, **caractérisé en ce que** des informations à propos d'une position relative ou absolue des participants (102, 104, 106) sont échangées entre les participants (102, 104, 106) et avec le système de calcul (118), seules étant envoyées aux participants (102, 104, 106) individuels des parties de la chaîne de blocs qui sont pertinentes pour ces participants du fait de leur position.

6. Procédé de communication inter-participants dans un premier participant (102), dans lequel une première transition d'état dans le système de conduite autonome est déterminée en fonction d'informations à propos d'un état du système de conduite autonome,
les participants étant des véhicules et des informations à propos d'au moins une deuxième transition d'état dans le système de conduite autonome étant reçues (214) en provenance d'au moins une chaîne de blocs et l'état du système de conduite autonome étant déterminé en fonction des informations à propos de l'au moins une deuxième transition d'état (218), le procédé étant **caractérisé en ce qu'**une décision d'un deuxième participant (104) de sélectionner une deuxième trajectoire (114) au lieu d'une ancienne deuxième trajectoire communiquée précédemment, afin de contourner un objet (116), est mise à la disposition du premier participant (102) en tant que deuxième changement d'état par le biais de l'au moins une chaîne de blocs et la décision du premier participant (102) sur la manière de réagir à la deuxième trajectoire (114) se basant sur la deuxième trajectoire (114).

7. Procédé selon la revendication 6, **caractérisé en ce que** les informations à propos de la deuxième transition d'état sont vérifiées (216) en fonction d'informations à propos d'au moins une partie de l'état du système de conduite autonome en provenance de l'au moins une chaîne de blocs.

8. Procédé selon l'une des revendications 6 et 7, **caractérisé en ce que** les informations à propos de la première transition d'état sont envoyées (204) en vue de leur gestion dans au moins une chaîne de blocs.

9. Système comprenant un premier participant (102) et un arrangement de communication inter-participants, l'arrangement comportant un récepteur, lequel est configuré pour recevoir des informations à propos d'une première transition d'état dans un système de conduite autonome de la part d'un participant (102, 104, 106) au système de conduite autonome, l'arrangement comportant un système de calcul (118) qui est configuré pour déterminer des informations à propos d'un état du système de conduite autonome en fonction des informations à propos de la première transition d'état et en fonction d'informations à propos d'au moins une deuxième transition d'état dans le système de conduite autonome, et mémoriser les informations à propos de l'état dans au moins une chaîne de blocs, et les participants étant des véhicules, et le système étant **caractérisé en ce que** le système de calcul est configuré pour mettre à la disposition du premier participant (102) une décision d'un deuxième participant (104) de sélectionner une deuxième trajectoire (114) au lieu d'une ancienne deuxième trajectoire communiquée précédemment, afin de contourner un objet (116), en tant que deuxième changement d'état par le biais de l'au moins une chaîne de blocs, le premier participant (102) étant configuré pour baser sur la deuxième trajectoire (114) la décision du premier participant (102) concernant la manière de réagir à la deuxième trajectoire (114).

10. Système selon la revendication 9, **caractérisé en ce que** les informations à propos de l'état comprennent un en-tête ainsi que des informations à propos de la première transition d'état et l'au moins une deuxième transition d'état.

11. Système selon l'une des revendications 9 et 10, **caractérisé en ce que** l'arrangement comporte un émetteur, lequel est configuré pour envoyer au moins une partie des informations à propos de l'état depuis l'au moins une chaîne de blocs à au moins un participant du système de conduite autonome.

12. Système selon l'une des revendications 9 à 11, **caractérisé en ce que** les informations à propos du changement d'état comprennent des informations à propos d'une trajectoire d'un participant du système de conduite autonome, à propos de l'objet qui a été détecté par un participant du système de conduite autonome, à propos d'une décision d'un participant du système de conduite autonome, à propos du premier participant (102) du système de conduite autonome qui a été détecté par le deuxième participant (104) du système de conduite autonome, ou à propos d'une position momentanée d'au moins un participant du système de conduite autonome.

13. Arrangement de communication inter-participants dans un premier participant (102), l'arrangement comportant un contrôleur (108), qui est configuré pour déterminer une première transition d'état dans un système de conduite autonome en fonction d'informations à propos d'un état du système de conduite autonome, les participants étant des véhicules et l'arrangement étant **caractérisé en ce qu'**il comporte un dispositif de réception, lequel est configuré pour recevoir depuis une chaîne de blocs des informations à propos d'au moins une deuxième transition d'état dans le système de conduite autonome, et le contrôleur étant configuré pour déterminer l'état du système de conduite autonome en fonction des informations à propos de l'au moins une deuxième transition d'état, la deuxième transition d'état contenant une décision d'un deuxième participant de sélectionner une deuxième trajectoire au lieu d'une ancienne deuxième trajectoire communiquée précédemment, afin de contourner un objet, et de baser sur la deuxième trajectoire (114) la décision du premier participant (102) sur la manière de réagir à la deuxième trajectoire (114) .

14. Arrangement selon la revendication 13, **caractérisé en ce que** le contrôleur (108) est configuré pour vérifier les informations à propos de la deuxième transition d'état en fonction d'informations à propos d'au moins une partie de l'état du système de conduite autonome en provenance de la chaîne de blocs.

15. Arrangement selon l'une des revendications 13 et 14, **caractérisé en ce que** l'arrangement comporte un dispositif d'émission, lequel est configuré pour émettre les informations à propos de la première transition d'état en vue de leur gestion dans une chaîne de blocs.

16. Véhicule automobile, comprenant un contrôleur (108) selon l'une des revendications 13 à 15.

17. Programme informatique, **caractérisé en ce que** le programme informatique comprend des instructions lors de l'exécution desquelles est mis en œuvre au moins un des procédés selon les revendications 1 à 8.
